# EUROPÄISCHE PATENTSCHRIFT

(11) **EP 0 920 719 B1**
(45) Veröffentlichungstag und Bekanntmachung des Hinweises auf die Patenterteilung: **10.04.2002**
(21) Anmeldenummer: 97942866.1
(22) Anmeldetag: 21.08.1997
(51) Int. Cl.: H02G 1/12

(54) **ABISOLIERMASCHINE**
STRIPPING MACHINE
MACHINE A DENUDER

(30) Priorität: 21.08.1996 CH 205396
(43) Veröffentlichungstag der Anmeldung: 09.06.1999
(73) Patentinhaber: Schleuniger Holding AG, 3608 Thun (CH)
(72) Erfinder: STEPAN, Jiri, CH-7320 Sargans (CH)
(74) Vertreter: Rosenich, Paul
(86) Internationale Anmeldenummer: EP9704532
(87) Internationale Veröffentlichungsnummer: WO9808283

(56) Entgegenhaltungen:
- EP-A- 0 195 932
- EP-A- 0 352 038
- EP-A- 0 673 099

## Beschreibung

Die Erfindung betrifft eine Abisoliermaschine für optische oder elektrische Leiter, insbesondere für Koaxialkabel bzw. ein Verfahren zum Längenmessen gemäss dem Oberbegriff des Anspruches 1 bzw. zum Längenkorrigieren gemäss dem Oberbegriff des Anspruches 2 und eine Vorrichtung gemäss dem Oberbegriff des Anspruches 3. Die Europäische Patentanmeldung EP-673099-A2 beschreibt eine solche Abisoliervorrichtung mit Spannbacken, Zentrierbacken und rotierenden Messervorrichtungen. Das, was in der angegebenen Europäischen Patentanmeldung als bevorzugter oder vorteilhafter Messvorgang beschrieben wird, nämlich das Abmessen der Länge eines eingeführten Leiterendstückes, kann in der Praxis Nachteile aufweisen. Der in der Patentanmeldung beschriebene Vorgang setzt sich im wesentlichen zusammen aus dem axialen Festhalten des Kabelendes mittels den Spannbacken, einem Schliessen der Zentrierbacken bis auf den Kabelaussendurchmesser, worauf die Zentrierbacken unter einer Federbelastung auf den Kabelaussendurchmesser vorgespannt bleiben, und dem anschliessenden, axialen Verschieben der Zentrierbacken bis zum Ende des Kabelendes, bei dem die Zentrierbacken - wie in der Patentanmeldung gedacht - unter der Federkraft gegeneinander schliessen, was anschliessend zu einem Signalabgang von einem Drucksensor führen soll.

Dieses Verfahren kann aber gerade bei dünnen Kabeln, für die die vorliegende Lösung hauptsächlich dienen soll, insbesondere mit weichen Aussenummantelungen nachteilhaft sein, da unter der Reibung zwischen Zentrierbacken und Aussenmantel dieser gegenüber den innenliegenden Schichten des Kabels axial verschoben werden kann, so dass der Mantel den Leiter am Kabelende geringfügig überragt, wodurch es zu falschen Längenabtastungen kommen kann. Darüber hinaus kann es durch die unter Kraft anliegenden Zentrierbacken der bekannten Konstruktion zu Abschirmungsbeschädigungen beim Abisoliervorgang kommen.

Der Erfindung liegt als erste Aufgabe zu Grunde, ein verbessertes Längenmessverfahren und eine Vorrichtung zur seiner Durchführung für Kabelenden in Absoliermaschinen vorzuschlagen.

Gelöst wird diese Aufgabe durch die Kombination der Merkmale wie in Verfahrensanspruch 1 bzw. Produktanspruch 3 beschrieben.

Die tatsächliche Länge des Kabelendes ermittelt sich somit erfindungsgemäss durch das Abtasten einer bestimmten Axialverschiebung der Zentrier- oder Messerbacken relativ zum Kabelende (wie an sich bekannt, neu allerdings in teilweise abgehobenem Zustand der Backen bzw. bei kraftlos oder mit geringer Kraft anliegenden Backen) von einer definierten Position in der Nähe der Spannbacken bis zum Kabelende, wobei gegebenenfalls das Einlegen eines Kabels und abtastende Erreichen des Kabelendes durch einen lichtoptischen Sensor detektiert wird, der somit die Längenmessung des Verschubweges der Zentrier- bzw. Schneidebacken beendet.

Dabei gibt es erfindungsgemäss im wesentlichen drei Varianten:
a) Die Zentrier- und/oder Messerbacken werden in Kenntnis des Kabeldurchmessers (durch vorheriges Eingeben dieses Wertes) in einem geringen radialen Abstand zur Kabeloberfläche positioniert.
b) Die Zentrier- und/oder Messerbacken werden kraftlos oder mit geringer Kraft an die Kabeloberfläche angelegt.
c) Die Zentrier- und/oder Messerbacken werden aus einem Anliegenden Zustand in einen kraftlos anliegenden oder abgehobenen Zustand gehoben.

Unter "geringer Kraft" wird im Sinne der Erfindung eine Kraft verstanden, die unwillkürlich auftritt, wenn ein Gegenstand (Backen) einen anderen Gegenstand (Kabel) berührt, obwohl nicht beabsichtigt ist, dass der Gegenstand unter Krafteinwirkung am anderen anliegt. Jedenfalls ist diese geringe Kraft so klein, dass bei einer Relativverschiebung zwischen den beiden Gegenständen (Backen, Kabel) der eine auf den anderen mit Sicherheit keine störende mechanische Einwirkung ausübt.

Bei diesem Vorgang befinden sich die Zentrier- und/oder Messerbacken bevorzugt in der Nähe der Spannbacken bzw. werden in die Nähe der Spannbacken verfahren, um dort das Kabel zu zentrieren bzw. mit der Längenmessung zu beginnen. Dies ist u.a. vorteilhaft, weil die Spannbacken in der Regel selbst auch zentrierend ausgebildet sind und so das Kabel dort gut umschlossen werden kann.

Optische Sensoren sind im Zusammenhang mit Abisoliereinrichtungen an sich nichts Neues. So hat die Firma Schleuniger bereits 1986 Anschlagsensoren für Kabelenden angewendet, die zum Teil im Sensorteil Lichtoptik beinhalteten, um einen erfolgten Anschlag bzw. den daraus resultierenden kleinen Verschiebeweg einer Sensorstange zu detektieren.

Die Firma Komax hat unter der Typennummer 324 eine Einrichtung mit Lichtoptik veröffentlicht, die den Abisolierzustand eines bereits abisolierten Kabels feststellen konnte, um so - digital verarbeitbar - eine Meldung bzw. Fehlermeldung zu produzieren. In der erwähnten Europäischen Patentanmeldung ist ebenso der Einsatz eines Lichtschrankens vorgeschlagen, der jedoch nur zur Grobausrichtung und optischen Abtastung eines zu bearbeitenden Leiterendabschnittes ausgebildet bzw. vorgesehen ist. Seine Funktion entspricht somit etwa der oben angegebenen Funktion des optischen Sensors im Anschlagsensor von Schleuniger. Dieser Sensor wirkt mit einer Sensorstange zusammen, um das Eintreffen eines Kabelendes zu signalisieren.

Optische Sensoren wurden bei der Kabelverarbeitung bisher jedoch nicht zum Messen der Länge von Kabeln bzw. Kabelenden eingesetzt.

Der Vorteil gegenüber der bekannten Lösung ist, dass trotz relativ guter Zentrierung (das Kabel kann unter seinem Eigengewicht leicht an einem Zentrier- oder Messer- (z.B. V-Messer)backen anliegen) eine Beschädigung oder eine Längenverschiebung des Mantels des Leiters vermieden wird und daher eine exaktere Messung des Leiterendes möglich ist. Die in diesem Zusammenhang erfindungsgemäss eingesetzte Sensoroptik ermöglicht somit - in Zusammenwirken mit einer herkömmlichen Längenmesseinrichtung - entlang des axialen Verschubweges der Backen eine genaue Längenmessung des Leiterendstückes von einem Startpunkt bis zum tatsächlich festgestellten Leiterende. Dies jedoch - infolge des erfindungsgemässen Öffnens der Backen - ohne Fehlererzeugung durch Reibungskräfte zwischen Backen und Kabel.

Anspruch 2 gibt ein Verfahren an zum Korrigieren einer Fehllänge eines Kabels in einer Kabelabisoliermaschine, in dem die Kabelenden von den Zentrierbacken erfasst und in Axialrichtung auf die richtige Position verschoben werden. Gemäß dieser Ausbildung der Erfindung wird das maschinelle und automatische Einstellen der Kabelendlänge auf einen gemessenen Wert ermöglicht, so dass selbst bei flexiblen Kabeln und bei ungenauem oder manuellem Einführen solcher Kabel in eine Abisoliermaschine die richtige (gewünschte) Länge abisoliert werden kann.

Besondere Weiterbildungen bzw. Ausbildungen und Varianten der Erfindung sind in den abhängigen Ansprüchen beschrieben bzw. unter Schutz gestellt.

Durch eine besondere Steuerung werden die Backen in einer beispielsweise waagerechten Ebene gehalten, so dass man von oben einen Leiter einführen kann, der die Lichtschranke unterbricht und dadurch die Spannbacken triggert. Die Spannbacken schliessen und damit ist bereits eine gewisse Zentrierung durch die Spannbacken gegeben. In diesem Fall kann die Lichtschranke auch zwischen Spannbacken und Zentrierbakken angeordnet sein.

Als Lichtschranken können herkömmliche Lichtschranken, gegebenenfalls auch Reflextaster verwendet werden.

Hinsichtlich der Auflösung im Feinbereich empfehlen sich jedoch Lichtschranken. Für eine Ausführungsvariante könnte beispielsweise ein Lichtschranken "DL 20 oder DLM 30" der Firma SMT Sensortechnologie München GmbH zum Einsatz gelangen. Mit einem Standardverstärker lässt sich mit diesen Lichtschranken eine Auflösung bis 0,2 mm Kabeldurchmesser erreichen. Für noch feiner Auflösungen oder gegebenenfalls auch für das Erkennen von Abisolierstufen können die angegebenen Lichtschranken mit einem hochauflösenden Verstärker noch dahingehend verbessert werden, dass die Auflösung unter 0,05 mm Drahtdurchmesser steigt. In dem Ausführungsbeispiel könnte somit als Verstärker die Typen V6/V7 für Standardauflösung oder V62/V72 für hochauflösende Verstärkung der erwähnten Firma STM zum Einsatz gelangen.

In der vorliegenden Anmeldung wird insbesondere immer auf Zentrier- bzw. Messerbacken Bezug genommen. Im Rahmen der Erfindung liegen jedoch auch Aufbauten, die nicht ausschliesslich auf Backen abgestellt sind, sondern beispielsweise auch andere als backenförmige Zentrier- bzw. Abisoliereinrichtungen umfassen. Für das Zentrieren könnten beispielsweise auch trichterförmige Einrichtungen - für das Durchtrennen auch Lasermesser, um die eigene Achse rotierende scheibenförmige Messer o.dgl. zum Einsatz gelangen.

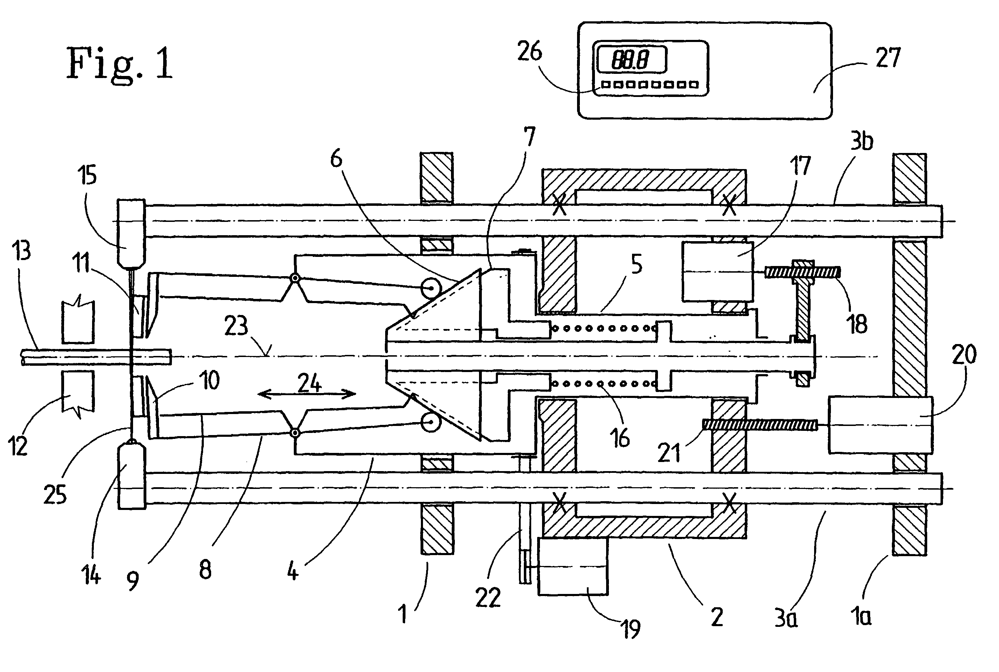

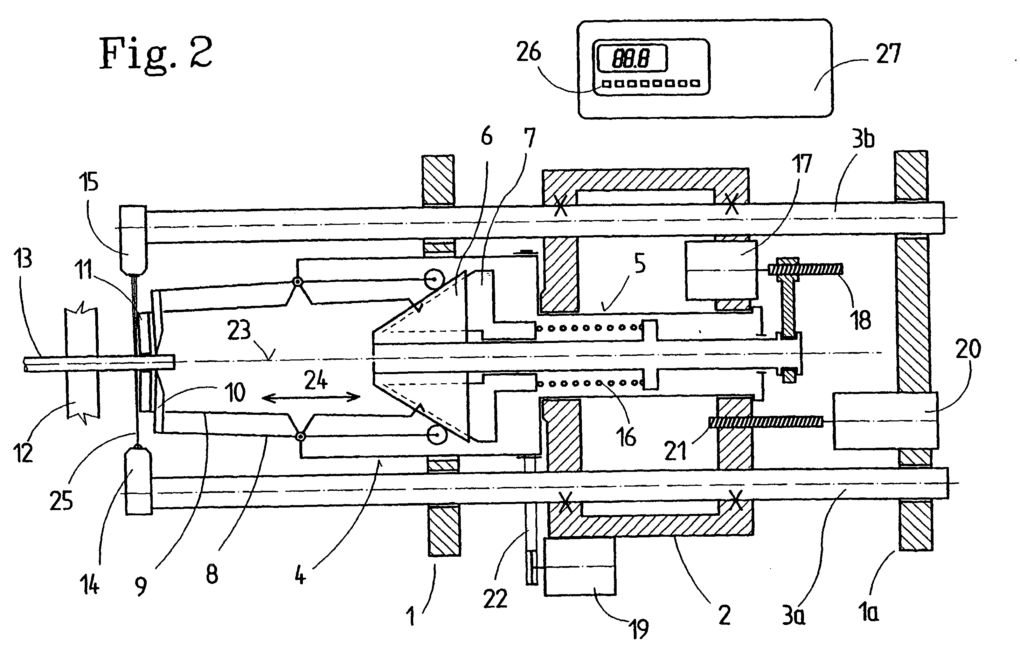

Anhand eines konkreten Ausführungsbeispieles wird die Erfindung beispielhaft näher beschrieben. Es zeigen dabei im Schnitt Fig. 1 einen Aufbau gemäss des erfolgreich im Einsatz stehenden Typ 207 der Anmelderin mit erfindungsgemäss verlängerten Führungsstangen und einem Lichtschranken bei geöffneten Zentrier- und Messerbacken und die Fig. 2 denselben Aufbau mit geschlossenen Zentrierbacken.

Die Figuren werden zusammenhängend beschrieben. Auf den grundsätzlichen mechanischen Aufbau dieser beispielhaft dargestellten Abisoliervorrichtung braucht nicht näher eingegangen zu werden, da dieser durch die EP-B1-195932 aber auch z.B. die Type 207 von Schleuniger beispielhaft geoffenbart ist. Auf die diesbezügliche Figurenbeschreibung und Figuren in dieser zitierten EP-B1-195932 wird hiermit ausdrücklich verwiesen.

Neu sind an der erfindungsgemässen Vorrichtung die verlängerten Führungsstangen 3, die um die Zentrier- bzw. Drehachse gespiegelt angeordnet sind und mit einem Laufschlitten 2 starr verbunden sind, der auf sich axial unverschieblich ebenso den rotierenden Teil, insbesondere die Abisoliermesser 10 und die Zentrierbacken 11 trägt.

Selbstverständlich umfasst die Erfindung auch Varianten mit nicht rotierenden Zentrierbacken bzw. Abisoliermessern, wie z.B. bekannt durch die Typen US 2015 oder 2500 von Schleuniger.

Im Rahmen der Erfindung ist es auch möglich, mehrere Führungsstangenpaare 3 vorzusehen, die jeweils um die Zentrierbzw. Drehachse 23 gespiegelt angebracht sind. Die Führungsstangen 3 tragen an ihren kabelseitigen Enden optische Sensoren - Sender und Empfänger. Da sowohl die Führungsstangen 3 als auch die Zentrierbacken 11 und Abisoliermesser 10 axial zueinander über den Laufschlitten 2 festgelegt sind, besteht zwischen der Schnittlinie der Abisoliermesser 10 und dem Lichtstrahl 25 der optischen Sensoren 14 und 15 ein starrer Abstand. Wird der Laufschlitten 2 längs der Achse 23 entsprechend dem Pfeil 24 verschoben, wandert der Lichtstrahl 25 entlang des zum Abisolieren eingesetzten Kabels 13. In der in Figur 1 dargestellten Stellung könnte dies zu einem ungenauen Messvorgang führen, wenn das Kabel 13 nicht wie dargestellt steif und zentriert sondern flexibel und räumlich undefiniert in die Abisoliervorrichtung ragen würde.

Hier greift die Erfindung wirkungsvoll ein, indem wie in Fig. 2 angedeutet das Kabel 13 durch geschlossene Spannbakken 12 axial fixiert wird und durch leicht geschlossene - d.h. kraftlos das Kabel berührende Zentrierbacken 11 zentriert wird. Bevorzugt sind die Zentrierbacken 11 dazu, wie an sich bekannt, konkav ausgebildet. Sollten die Zentrierund/oder Messerbacken beim Messvorgang jedoch rotieren, ist auch eine plane Ausbildung derselben denkbar. Eine weiter Variante ergibt sich durch die Anwendung von Zentrierbacken wie sie bespielsweise in der EP-B1-297484 beschrieben sind, da diese auch in nicht rotierendem Zustand mehrseitig zentrieren. Für den näheren Aufbau einer solchen Zentrierbacken und/oder Messeranordnung wird daher ausdrücklich auf die Figurenbeschreibung dieser EP-B1-297484 verwiesen.

Im Rahmen der Erfindung liegen nicht nur Aufbauten mit Zentrierbacken; es könnten auch andere Zentriervorrichtungen vorgesehen sein und/oder die Messer so ausgebildet sein, dass sie eine zentrierende Funktion übernehmen, z.B. V-Messer.

Die Erfindung beinhaltet jedoch, abgesehen von der photoelektrischen exakten Bestimmung des maschinenseitigen Endes des Kabels 13 noch einen neuen Aspekt, wie in Anspruch 2 angegeben.

Wenn das Kabel 13 durch die Spannbacken 12, wie in Fig. 2 dargestellt, fixiert ist und der Längenmessvorgang durch Verschiebung des Laufschlittens 2 in Richtung des Pfeiles 24 abgeschlossen ist, ist es gemäss dieser speziellen Ausgestaltung der Erfindung möglich, eine allfällige Minderlänge des Kabelendes zu korrigieren. Die Minderlänge wird dann gemäss den folgenden Verfahrensschritten erfindungsgemäss beseitigt: Die Zentrierbacken 11 und/oder Abisoliermesser 10 ergreifen und fixieren das Kabel 13.

Die Spannbacken 12 öffnen geringfügig und der Laufschlitten 2 verfährt mit den Zentrierbacken 11 und dem Kabel 13 die Minderlänge entsprechend der Pfeilrichtung 24 nach rechts.

Derselbe Vorgang nur umgekehrt nach links kann stattfinden, wenn eine unerwünschte Überlänge des Kabels detektiert würde.

Die definitive Längenmessung kann dabei problemlos über den elektronisch gesteuerten Antrieb 20 des Laufschlittens 2 fertiggestellt werden. Selbstverständlich können im Rahmen der Erfindung jedoch auch sämtliche anderen bekannten Längenmessverfahren an Laufschlitten zum Einsatz gelangen.

### Bezugszeichenliste

- 1,1a: Fester Rahmen
- 2: Laufschlitten
- 3: Führungsstangen
- 4: Abisolierkopf vorzugsweise rotierbar
- 5: Kopfwelle
- 6: Keilfläche für Messerhebel
- 7: Keilfläche für Zentrierbackenhebel
- 8: Messerhebel
- 9: Zentrierbackenhebel
- 10: Abisoliermesser
- 11: Zentrierbacken
- 12: Spannbacken
- 13: Leiter bzw. Leiterende
- 14: Photoelektrische Schalter-Sender
- 15: Photoelektrische Schalter-Empfänger
- 16: Andrückfeder für Zentrierbacken
- 17: Antriebsmotor für Steuerung mit Encoder, Schrittmotor o.dgl.
- 18: Gewindespindel für Messer-Zentrierbacken Steuerung
- 19: Motor für Kopfrotation
- 20: Motor für Längsvorschub mit Encoder, Schrittmotor o.dgl.
- 21: Gewindespindel für Laufwangen Vorschub
- 22: Antriebsriemen
- 23: Zentrier- bzw. Drehachse
- 24: Pfeil
- 25: Lichtstrahl
- 26: Eingabeeinheit
- 27: Elektronische Steuerung
- 28: Rechenglied

## Patentansprüche

1. Verfahren zur Längenmessung eines Kabelendes (13), insbesondere in einer Kabelabisoliermaschine o.dgl. mit Spannbacken (12), axial verschiebbaren Messer- und/oder Zentrierbacken (10,11) an einem Schlitten (2) mit einem gesteuerten Antrieb (20) unter Verwendung wenigstens eines - insbesondere optischen - Sensors (14,15), bei dem das Kabelende (13), nach dem Einführen desselben, durch Spannbacken (12) in seiner Bearbeitungslage fixiert wird, worauf die Messer- und/oder Zentrierbacken (10,11) das Kabelende (13) an seinem Aussenmantel erfassen und zentrieren und in einer relativ zentrierten Lage halten, worauf die Zentrierbacken (11) in Axialrichtung bis zum oder geringfügig über das Leiterende verschoben werden, **dadurch gekennzeichnet, dass** die Messer- und/oder Zentrierbacken (10,11)
a) in Kenntnis des Kabeldurchmessers durch vorheriges Eingeben oder Erfassen dieses Durchmessers in einem geringen radialen Abstand zur Kabeloberfläche positioniert oder
b) kraftlos an die Kabeloberfläche angelegt oder
c) aus einem anliegenden Zustand in einen kraftlos anliegenden oder abgehobenen Zustand gehoben werden,
wobei der Sensor (14,15) unmittelbar neben den Messerund/oder Zentrierbacken (10,11) vorgesehen ist und während des Verschiebevorganges das Vorhandensein des eingeführten Kabelendes (13) detektiert und derart berührungslos das tatsächliche Kabelende für den weiteren Steuerungs- und Abisolierablauf feststellt.

2. Verfahren zum Korrigieren einer Fehllänge eines Kabels bei einem in einer Kabelabisoliermaschine mit Zentrierbacken und Spannbacken durch Spannbacken festgehaltenen Kabel, **dadurch gekennzeichnet, dass** bei durch ein Verfahren zur Längenmessung des Kabelendes (13) festgestellter Längendifferenz des eingeführten Kabelendes (13) zur gewünschten Einschublänge, die Zentrierbacken (11) das Kabel (13) erfassen und dieses in Axialrichtung in die gewünschte axiale Kabelendposition verschieben, wobei während des Verschiebevorganges die Spannbacken (12) das Kabel (13) für den Verschiebeweg freigeben.

3. Vorrichtung zur Durchführung des Verfahrens nach Anspruch 1 oder 2 mit Spannbacken (12), axial verschiebbaren Messer- und/oder Zentrierbacken (11) und einem - insbesondere optischen - Sensor (14,15) unmittelbar im Bereich der Messer- und/oder Zentrierbacken (11) zur Erfassung eines Kabel- bzw. Drahtendes (13), wobei der Sensor (14,15) über eine Steuerung (27) elektronisch mit einem gesteuerten Vorschub (20) für den Verschubweg der Zentrierbacken (11) in axialer Richtung des Kabels (13) gekoppelt ist, um bei einem gesteuerten axialen Verschub der Zentrierbacken (11) entlang des Kabelendes (13) dessen Ende zu detektieren und den entsprechenden Verschiebeweg bis zum Ansprechen des Sensors (14,15) anzugeben, **dadurch gekennzeichnet, dass** den Messerund/oder Zentrierbacken (11) der gesteuerte Vorschub (20) und ein Radialantrieb (17) gekoppelt zugeordnet sind, die als einfach oder mehrfach überlappende prismatische Greifflächen im Messfall die Manteloberfläche umfassen, und dass eine Steuerung (27) vorgesehen ist, die im Betriebszustand den Vorschub (20) und den Radialantrieb (17) so steuert, dass die Greifflächen das Kabel kraftlos oder mit geringem Spiel halten, so dass sie kraft- und im wesentlichen reibungslos an der Kabeloberfläche axial entlanggleitbar sind.

4. Verfahren nach Anspruch 2, **dadurch gekennzeichnet, dass** Zentrierbacken (11) zur Verfügung gestellt werden, die an den einander zugewandten Greifflächen prismatisch und/oder konkav ausgebildet sind, wobei die prismatischen Greifflächen wenigstens spiegelbildlich um die Drehachse (23) der Backen angeordnet werden, und wobei die Achse eines abzuisolierenden Kabels im Abisolierfall mit der Drehachse (23) zusammengelegt wird, und wobei das Kabel mit allen einander zugewandten Greifflächen berührt wird.

5. Vorrichtung nach Anspruch 3, **dadurch gekennzeichnet, dass** die Steuerung (27) ein Programm und eine Eingabeeinheit (26) umfasst, wobei bei der Eingabeeinheit (26) eine gewünschte Kabelendaxiallage eingebbar ist, **dadurch gekennzeichnet, dass** das Programm im Falle des Nichtübereinstimmens der eingestellten Kabelendaxiallage mit der tatsächlich gemessenen Kabelendlage die Spann- und Zentrierund/oder Messerbacken (11,12) wechselweise ansteuert, so dass die Messer- und/oder Zentrierbacken (11) das Kabel (13) spannen und in Axialrichtung in die gewünschte Axiallage verschiebt, während die Spannbacken (12) wenigstens geringfügig öffnen, um diesen Verschiebeweg für das Kabel (13) freizugeben.

6. Vorrichtung nach einem der vorhergehenden Ansprüche **3,5, dadurch gekennzeichnet, dass** der - vorzugsweise optische - Sensor (14,15) mit wenigstens einem Zentrierbacken (11) verbunden, vorzugsweise darin integriert ist.

7. Vorrichtung nach einem der vorhergehenden Ansprüche **3,5,6, dadurch gekennzeichnet, dass** der Sensor wenigstens eine Lichtschranke (14,15) mit einem bevorzugt flächenförmigen Lichtstrahl (25) umfasst.

8. Vorrichtung nach Anspruch 6, **dadurch gekennzeichnet, dass** die Lichtenergie für den Sensor (14,15) mittels - insbesondere flexiblem - lichtoptischen Leiter zu- oder abgeführt wird.

9. Vorrichtung nach einem der vorhergehenden Ansprüche, **3,5 bis 8, dadurch gekennzeichnet, dass** die Lichtenergie in oder an wenigstens zwei einander um die Drehachse gegenüberliegenden, nicht drehenden, mit einem Laufschlitten (2) starr verbundenen Führungsstangen (3) geführt wird, bzw., dass diese Führungsstangen (3) wenigstens einen - vorzugsweise optischen Sensor (14,15) tragen, wobei an dem Laufschlitten (2)- zu diesem axial unverschieblich -, wie an sich bekannt, die Zentrier- und/oder Messerbacken (10,11) gehalten sind.

10. Vorrichtung nach einem der vorhergehenden Ansprüche 3 und 5 bis 9, **dadurch gekennzeichnet, dass** die Abisoliervorrichtung ein Steuerprogramm aufweist, welches in Bezug auf die aktuelle Kabelendlage im Betriebszustand die jeweils programmierte(n) axiale(n) Schnittposition(en) anfährt und die Schnitte ausführt.

## Claims

1. Method for length measurement of a cable end (13), in particular in a cable insulation stripping machine or the like, comprising clamping jaws (12), axially displaceable knife and/or centring jaws (10, 11) on a carriage (2) having a controlled drive (20) with the use of at least one - in particular optical - sensor (14, 15), in which the cable end (13), after insertion thereof, is fixed by clamping jaws (12) in its processing position, whereupon the knife and/or centring jaws (10, 11) grip the cable end (13) by its outer sheath and centre said cable end and hold it in a relatively centred position, whereupon the centring jaws (11) are moved in the axial direction up to or slightly over the conductor end, **characterized in that** the knife and/or centring jaws (10, 11)
a) with a knowledge of the cable diameter by prior input or acquisition of this diameter, are positioned a small radial distance away from the cable surface or
b) are placed against the cable surface without force or
c) are raised from an adjacent state to a state in contact without force or a raised state,
the sensor (14, 15) being provided directly adjacent to the knife and/or centring jaws (10, 11) and detecting the presence of the inserted cable end (13) during the displacement process and thus holding the actual cable end, without contact, for the further control and insulation stripping sequence.

2. Method for correcting an incorrect length of a cable in the case of a cable held by clamping jaws in a cable insulation stripping machine comprising centring jaws and clamping jaws, **characterized in that**, in the case of a length difference of the inserted cable end (13), determined by a method for length measurement of the cable end (13), relative to the desired insertion length, the centring jaws (11) grip the cable (13) and move it in the axial direction to the desired axial cable end position, the clamping jaws (12) releasing the cable (13) for the displacement during the displacement process.

3. Apparatus for carrying out the method according to Claim 1 or 2, comprising clamping jaws (12), axially displaceable knife and/or centring jaws (11) and a - in particular optical - sensor (14, 15) directly in the region of the knife and/or centring jaws (11) for detecting the cable or wire end (13), the sensor (13, 15) being electronically coupled via a control (27) to a controlled feed (20) for the displacement of the centring jaws (11) in the axial direction of the cable (13), in order to detect the end of the cable during a controlled axial feed of the centring jaws (11) along the cable end (13) and to indicate the corresponding displacement up to the response of the sensor (14, 15), **characterized in that** the knife and/or centring jaws (11) are coupled with the controlled feed (20) and a radial drive (17), which, as singly or multiply overlapping prismatic gripping surfaces, grip the sheath surface in the event of a measurement, and that a control (27) is provided which controls the feed (20) and the radial drive (17) in the operating state in such a way that the gripping surfaces hold the cable without force or with slight play so that they are capable of sliding axially along the cable surface without force and substantially without friction.

4. Method according to Claim 2, **characterized in that** centring jaws (11) are provided which are prismatic and/or concave at the gripping surfaces facing one another, the prismatic gripping surfaces being arranged at least as mirror images across the axis (23) of rotation, and the axis of a cable from which the insulation is to be stripped being caused to coincide with the axis (23) of rotation in the case of insulation stripping, and the cable being touched by all gripping surfaces facing one another.

5. Apparatus according to Claim 3, **characterized in that** the control (27) comprises a program and an input unit (26), it being possible to input a desired cable end axial position in the input unit (26), **characterized in that**, when the set cable end axial position does not agree with the actually measured cable end position, the program, if required, actuates the clamping and centring and/or knife jaws (11, 12) so that the knife and/or the centring jaws (11) clamp the cable (13) and move it in the axial direction to the desired axial position, while the clamping jaws (12) open at least slightly in order to enable the cable (13) to perform this displacement.

6. Apparatus according to either of the preceding Claims 3 and 5, **characterized in that** the - preferably optical - sensor (14, 15) is connected to at least one centring jaw (11), preferably integrated therein.

7. Apparatus according to any of the preceding Claims 3, 5 and 6, **characterized in that** the sensor comprises at least one light barrier (14, 15) having a preferably planar light beam (25).

8. Apparatus according to Claim 6, **characterized in that** the light energy for the sensor (14, 15) is supplied or removed by means of - in particular flexible - fibreoptic cables.

9. Apparatus according to any of the preceding Claims 3, 5 to 8, **characterized in that** the light energy is transported in or on at least two nonrotating guide rods (3) opposite one another across the axis of rotation and rigidly connected to a carriage (2), or that these guide rods (3) carry at least one - preferably optical - sensor (14, 15), the centring and/or knife jaws (10, 11) being held on the carriage (2) axially nondisplaceably relative to said carriage - as known per se.

10. Apparatus according to any of the preceding Claims 3 and 5 to 9, **characterized in that** the insulation stripping apparatus has a control program which, in respect of the actual cable end position in the operating state, approaches the respective programmed axial cutting position(s) and performs the cut.

## Revendications

1. Procédé pour la mesure de longueur d'une extrémité de câble (13), en particulier dans une machine d'isolation de câbles ou similaire avec des mâchoires de serrage (12), des mâchoires à couteaux et/ou de centrage (10, 11) pouvant se déplacer dans le sens axial sur un chariot (2) avec un entraînement motorisé (20), utilisant au moins un capteur (14, 15) -spécialement optique-, dans lequel l'extrémité de câble (13), après l'introduction de ce dernier, est fixée par des mâchoires de serrage (12) dans sa position d'usinage, à la suite de quoi les mâchoires à couteaux et/ou de centrage (10, 11) saisissent l'extrémité du câble (13) sur son enrobage extérieur, la centrent et la maintiennent en position relativement centrée, à la suite de quoi les mâchoires de centrage (11) sont déplacées dans le sens axial jusqu'au niveau ou légèrement au delà de l'extrémité du conducteur, **caractérisé en ce que** les mâchoires à couteaux et/ou de centrage (10, 11)
a) en connaissant le diamètre du câble par saisie préalable ou information sur ce diamètre sont positionnées dans un faible écart radial par rapport à la surface du câble ou
b) sont posées sans application de force sur la surface du câble ou
c) sont relevées de leur position horizontale pour être mises en position horizontale ou levées sans application de force,
le capteur (14, 15) étant prévu directement près des mâchoires à couteaux et/ou de coupe (10, 11) et détectant, pendant le processus de déplacement, la présence de l'extrémité de câble introduite (13) et relevant sans contact l'extrémité réelle de câble pour assurer ultérieurement la commande et l'isolation.

2. Procédé pour la correction d'une longueur erronée d'un câble avec un câble maintenu dans un appareil d'isolation de câbles avec des mâchoires de centrage et des mâchoires de serrage par des mâchoires de serrage, **caractérisé en ce que**, en cas de différence de longueur de l'extrémité de câble introduite (13) par rapport à la longueur d'introduction souhaitée constatée par un processus de mesure de longueur de l'extrémité de câble (13), les mâchoires de centrage (11) saisissent le câble (13) et le déplacent dans le sens axial jusqu'à la position axiale d'extrémité de câble souhaitée, les mâchoires de serrage (12) permettant au câble (13) d'effectuer sa course.

3. Procédé de réalisation du procédé selon la revendication 1 ou 2 avec des mâchoires de serrage (12), des mâchoires à couteaux et/ou de centrage (11) pouvant se déplacer dans le sens axial et un capteur (14, 15) -spécialement optique-directement dans le secteur des mâchoires à couteaux et/ou de centrage (11) pour la saisie d'une extrémité de câble ou de fil électrique (13), le capteur (14, 15) étant couplé par système électronique par l'intermédiaire d'une commande (27) avec une avance motorisée (20) pour la course des mâchoires de centrage (11) dans le sens axial du câble (13), afin, en cas de course axiale motorisée des mâchoires de centrage (11) le long de l'extrémité du câble (13), de détecter l'extrémité de celui-ci et d'indiquer la course correspondante jusqu'à la réponse du capteur (14, 15), **caractérisé en ce que** sont couplés aux mâchoires à couteaux et/ou de centrage (11) l'avance motorisée (20) et un entraînement radial (17), qui englobent, comme surfaces prismatiques de saisie à recouvrement simple ou multiple, en cas de mesure, la surface de l'enrobage et qu'est prévue une commande (27) qui, pendant le fonctionnement, commande l'avance (20) et l'entraînement radial (17) de manière à ce que les surfaces de saisie maintiennent le câble sans application de force ou avec un faible jeu, de manière à ce qu'elles puissent être guidées globalement sans friction et sans application de force sur la surface du câble dans le sens axial.

4. Procédé selon la revendication 2, **caractérisé en ce que** des mâchoires de centrage (11) qui sont constituées en une forme prismatique et/ou concave sur les surfaces de saisie tournées l'une vers l'autre sont mises à disposition, les surfaces prismatiques de saisie étant disposées au moins en miroir autour de l'axe rotatif (23) des mâchoires et l'axe d'un câble à isoler, dans le cas d'une isolation, étant combiné avec l'axe rotatif (23) et le câble étant touché par toutes les surfaces de saisie tournées l'une vers l'autre.

5. Dispositif selon la revendication 3, **caractérisé en ce que** la commande (27) intègre un programme et une unité de saisie (26), une position axiale souhaitée d'extrémité de câble pouvant être entrée dans l'unité de saisie (26), **caractérisé en ce que** le programme, en cas de non-concordance de la position axiale d'extrémité de câble réglée avec la position d'extrémité de câble effectivement mesurée, commande alternativement les mâchoires de serrage et centrage et/ou mâchoires à couteaux (11, 12), de manière à ce que les mâchoires à couteaux et/ou mâchoires de centrage (11) tendent et déplacent le câble (13) jusqu'à la position axiale souhaitée, alors que les mâchoires de serrage (12) s'ouvrent au moins légèrement pour libérer cette trajectoire pour le câble (13).

6. Dispositif selon une des revendications précédentes 3, 5, **caractérisé en ce que** le capteur (14, 15) -de préférence optique- relié à au moins une mâchoire de centrage (11) y est de préférence intégré.

7. Dispositif selon une des revendications précédentes 3, 5, 6, **caractérisé en ce que** le capteur intègre au moins une barrière lumineuse (14, 15) avec un rayon lumineux (25) de préférence de forme surfacée.

8. Dispositif selon la revendication 6, **caractérisé en ce que** l'énergie lumineuse pour le capteur (14, 15) est acheminée ou évacuée au moyen d'un conducteur micro-optique - spécialement flexible -

9. Dispositif selon une des revendications précédentes 3, 5 à 8, **caractérisé en ce que** l'énergie lumineuse est guidée dans ou sur au moins deux barres de guidage (3) se faisant face autour de l'axe de rotation, non pivotantes, reliées fixement à un chariot (2) ou que ces barres de guidage (3) supportent au moins un capteur (14, 15) - de préférence optique, les mâchoires de centrage et/ou à couteaux (10, 11) étant maintenues de manière connue sur le chariot (2) - ne pouvant se déplacer dans le sens axial par rapport à celui-ci -.

10. Dispositif selon une des revendications précédentes 3 et 5 à 9, **caractérisé en ce que** le dispositif d'isolation présente un programme de commande, qui positionne pendant le fonctionnement le ou les emplacements de coupe axiaux respectivement programmés en fonction de la situation actuelle de l'extrémité de câble et exécute les coupes.
